# EUROPÄISCHE PATENTSCHRIFT

(11) **EP 2 428 133 B1**
(45) Veröffentlichungstag und Bekanntmachung des Hinweises auf die Patenterteilung: **30.11.2016**
(21) Anmeldenummer: 11180018.1
(22) Anmeldetag: 05.09.2011
(51) Int. Cl.: A46B 5/02, A46B 9/02, A46B 9/12, A01M 21/02, E04F 21/16, A46D 1/00, A46B 3/04, A46B 3/08

(54) **Fugen-Reinigungsvorrichtung**
Joint gap cleaning device
Dispositif de nettoyage de joints

(30) Priorität: 10.09.2010 DE 202010008507 U
(43) Veröffentlichungstag der Anmeldung: 14.03.2012
(60) Teilanmeldung: 16193145.6
(73) Patentinhaber: Waldenburger, André, 82054 Sauerlach-Arget (DE)
(72) Erfinder: Waldenburger, André, 82054 Sauerlach-Arget (DE)
(74) Vertreter: Beckord & Niedlich

(56) Entgegenhaltungen:
- WO-A1-2004/037451
- CA-A1- 1 125 708
- DE-A1- 3 410 043
- DE-A1- 19 722 285
- DE-A1-102004 063 828
- DE-U1- 9 002 346
- DE-U1- 20 209 986
- DE-U1-202004 016 043

## Beschreibung

Die Erfindung bezieht sich auf eine Fugen-Reinigungvorrichtung.

Für die Reinigung von Fugen gibt es praktisch keine vernünftigen Vorrichtungen, so dass man auf nur wenig geeignete Vorrichtungen wie Topf-Reinigungsschwämme und dergleichen zurückgreifen muss.

Die DE 10 2004 063828 A1 beschreibt eine Fugenbürste mit einem Haltegriff und einer Aufnahmeeinrichtung, die mit dem Haltegriff verbunden ist. An der Unterseite der Aufnahmeeinrichtung ist eine einzige längliche Bürste vorgesehen. Eine ähnliche Fugenbürste ist in der DE 20 2004 016043 U1 beschrieben. Die WO 2004/037451 A1 beschreibt eine Fugenreinigungsvorrichtung mit rotierender Bürste.

Aufgabe der Erfindung ist es, eine Fugen-Reinigungvorrichtung zu schaffen, welche eine bequeme und gute Reinigung von Fugen aller Art ermöglicht. Die Erfindung ist anwendbar auf mineralische und dauerelastische Fugen im Innen- und Außenbereich, beispielsweise auf Fugen in einer verfliesten Fläche oder zwischen Terrassenplatten. Solche Fugen haben in der Regel eine Breite von wenigen Millimetern, z.B. ein bis acht Millimeter, spezieller etwa zwei bis sechs Millimeter und noch spezieller etwa vier bis sechs Millimeter. Die Erfindung ist auf keine bestimmte Fugenbreite begrenzt.

Die Aufgabe wird erfindungsgemäß durch die Merkmale des Anspruches 1 gelöst. Weitere Ausgestaltungen der Erfindung sind in den Unteransprüchen beschrieben und unter Schutz gestellt.

Basis der Erfindung sind ein Haltegriff und eine schmale Bürstenleiste mit Bürsten kleiner oder gleich der Fugenbreite zur Aufnahme von Bürsten. Material sowie Festigkeit der Bürsten sind den zu bearbeitenden Fugen angepasst und dem Fachmann bekannt. In der Regel handelt es sich um eine Vielzahl sehr feiner, ziemlich steifer aber elastischer Kunststofffasern, die zu einem einzigen länglichen Bürstenstrang oder zu einer Vielzahl kleiner Bürstenbündel nebeneinander beziehungsweise hintereinander angeordnet sein können. Ein Beispiel für ein geeignetes Bürstenmaterial ist Polypropylen Copolymer mit einem Anteil von etwa 20 % Talkum. Dieses Material ist auch unter der Bezeichnung Karilen® bekannt. Der Bürstenkörper kann aus demselben Material bestehen wie die Borsten, selbstverständlich auch aus anderem Material als dem oben genannten Beispiel. Erfindungsgemäß ist die Breite der Bürsten der Fugenbreite angepasst. Die Erfindung ist somit zwar nicht auf eine bestimmte Bürstenbreite beschränkt, die Breite der Bürsten ergibt sich jedoch durch die beabsichtigte Anwendung und ist für den Fachmann unschwer ermittelbar.

Die Bürsten beziehungsweise Bürstenbündel können in entsprechenden Aushöhlungen an der unteren Befestigungsebene der Bürstenleiste befestigt werden, beispielsweise unter Pressdruck eingepasst und gegebenenfalls zusätzlich verklebt werden.

Es kann eine einzige lange Bürstenleiste an der Unterkante der Vorrichtung vorgesehen werden, oder zusätzlich eine kürzere vertikale Bürstenleiste an einer daran angrenzenden kurzen im wesentlichen senkrechten Seitenkante der Vorrichtung. Zwischen unterer und vertikaler Bürstenleiste kann ferner in einem Winkel von etwa 45° hierzu eine Verbindungs-Bürstenleiste angeordnet, die bevorzugte aus einem einzigen Bürstenbündel besteht. Die kürzere, als vertikal bezeichnete Bürstenleiste muss nicht notwendig in einem Winkel von 90° zu der unteren langen Bürstenleiste stehen, sondern kann mit dieser auch einen Winkel einschließen, der in der Nähe von 90° liegt, beispielsweise im Bereich von 70 bis 110°. Auch die Verbindungs-Bürstenleiste muss nicht in einem Winkel von 45° zur unteren langen Bürstenleiste stehen, sondern kann auch in einem Winkel zwischen etwa 30 und 60° relativ zur unteren langen Bürstenleiste angeordnet sein.

Halterung und Bürstenleiste werden in einem Bürstenkörper einstückig ausgebildet, wobei die der Fuge zugewandte untere Schmalseite der Reinigungsvorrichtung Reinigungsbürsten beziehungsweise eine Reihe von Reinigungs-Bürstenbündel aufweist, und vorzugsweise an einer angrenzenden Seitenkante der Vorrichtung eine zusätzliche vertikale Reihe von Bürstenbündeln vorgesehen ist, zwischen denen ein Verbindungs-Bürstenbündel angeordnet ist. Ein bequemer, an die Hand angepasster Haltegriff mit länglicher Halteöse ist als Verlängerung der Bürstenleiste nach außen weg von der zu reinigenden Fuge ausgebildet.

Bevorzugt werden Bürstenbündel mit einem Durchmesser von etwa 4 bis 6 mm, die aus einer Vielzahl sehr feiner und relativ steifer Kunststofffasern bestehen, die bevorzugte Länge der Bürstenbündel liegt bei 2 bis 10 mm, insbesondere zwischen 4 und 6 mm, zwischen den einzelnen Bürstenbündeln ist bevorzugt ein Zwischenraum von 1 bis 6 mm, bevorzugt 2 bis 4 mm, vorgesehen.

Vorzugsweise werden die Fugen vor der Bearbeitung durch die Vorrichtung erst für eine gewisse Zeit mit entsprechenden chemischen Substanzen in Form von Flüssigkeiten oder Pasten bearbeitet, wie beispielsweise eine chlorierte chemische Verbindung. Saure und alkalische Reinigungsmittel können verwendet werden.

Nach einem bevorzugten Ausführungsbeispiel ist die Bürstenleiste einstückig mit dem Haltegriff der Vorrichtung in einem Bürstenkörper ausgebildet. Die Dicke des Haltegriffs wird in der Regel größer sein als die Breite der Bürstenleiste, so dass der Haltegriff bequem in der Hand liegt und trotzdem die Bürstenbreite nicht vergrößert wird

Der Winkel zwischen der unterer Befestigungskante für die Bürsten an der Bürstenleiste und wenigstens einer daran angrenzenden senkrechten hinteren Seitenkante des Bürstenkörpers sollte etwas geringer als 90°, vorzugsweise 88 bis 94° sein. Auf diese Weise kann die Bürste voll bis an die Wand reinigen, beispielsweise bei senkrecht aufeinander treffenden Fliesen.

In dem Haltegriff kann ein Loch zur Aufnahme eines Stiels vorgesehen sein, um auch in aufrechter Haltung mit der Fugenbürste arbeiten zu können.

In der Zeichnung sind Ausführungsbeispiele der Erfindung dargestellt. Es zeigt:
Fig. 1 ein Beispiel der Fugenreinigungsvorrichtung, die nicht erfindungsgemäß ausgebildet ist,
Fig. 2 die in Fig. 1 dargestellte Vorrichtung von hinten,
Fig. 3 ein Ausführungsbeispiel einer Vorrichtung gemäß der Erfindung von hinten mit einstückig ausgebildeter Bürsteleiste,
Fig. 4 ein weiteres Ausführungsbeispiel der Erfindung von hinten mit sich nach oben verbreiterndem Haltegriff,
Fig. 5 die in Fig. 4 dargestellte Vorrichtung von oben,
Fig. 6 die in Fig. 4 und Fig. 5 dargestellte Vorrichtung in perspektivischer Darstellung von der Seite,
Fig. 7 ein weiteres Ausführungsbeispiel der Erfindung in perspektivischer Darstellung von vorne mit sich nach oben verbreiterndem Haltegriff, wobei die Bürsten in dieser Darstellung weggelassen wurden und noch ergänzt werden müssen
Fig. 8 die in Fig. 7 dargestellte Vorrichtung von der Seite.

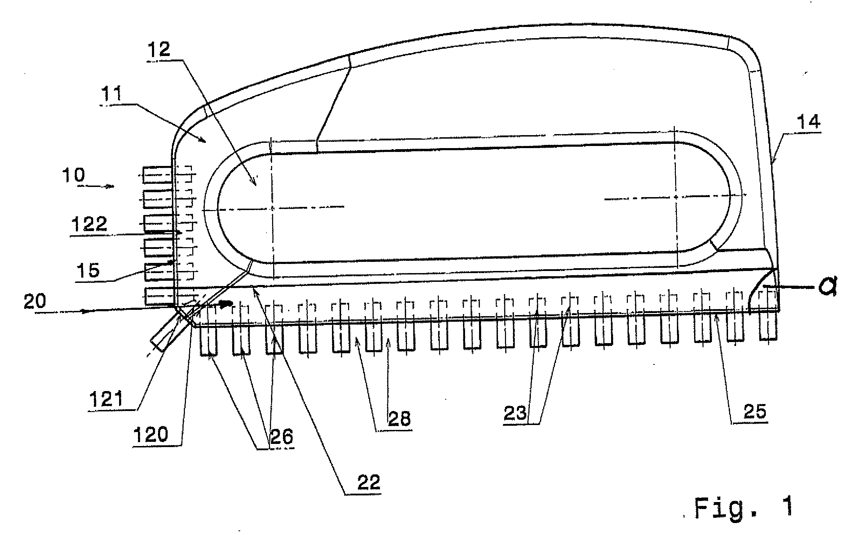

In Fig. 1 ist der obere Haltegriff der erfindungsgemäßen Vorrichtung allgemeinen mit 10 bezeichnet, die damit verbundene Bürstenleiste ist mit 20, die längliche Grifföse ist mit 12 bezeichnet. Durch diese Bestandteile wird ein einheitlicher Bürstenkörper gebildet.

An der Unterkante 25 der Bürstenleiste 20 sind eine Anzahl runder Bürstenbündel 26 hintereinander beziehungsweise nebeneinander angeordnet, die an entsprechenden Befestigungsösen 23 befestigt sind. Der Winkel a zwischen unterer Befestigungsebene der Unterkante 25 und den schmalen, nach oben sich erstreckenden Vorderkanten 14 und Hinterkanten 15 des Bürstenkörpers ist vorzugsweise kleiner als 90°, vorzugsweise 84 bis 88°, um beim Reinigen bis in die Ecken der Fugen zu gelangen, beispielsweise bei zwei in einem Winkel von 90° aufeinander treffenden Fliesenwänden. Die Zwischenräume zwischen den einzelnen Bürstenbündeln 26 sind mit 28 bezeichnet. Eine Halteleiste, welche die Befestigungsösen 23 enthält, ist mit 22 bezeichnet. Statt der Verwendung von Befestigungsösen können die Bürstenbündel 26 in dem in Fig. 1 dargestellten Beispiel auch direkt in eine Kunststoffmasse innerhalb der Halteleiste 22 eingegossen werden.

Senkrecht zur unteren Bürstenleiste 20 ist eine vertikale kurze Bürstenleiste 122 angeordnet, die ebenfalls einzelne Bürstenbündeln 26 umfasst.

Zwischen beiden Bürstenleisten 20, 122 ist eine Verbindungs-Bürstenleiste 121 angeordnet die im dargestellten Beispiel aus einem einzigen Bürstenbündel besteht und im wesentlichen in einem 45°-Winkel zu der langen unteren Bürstenleiste 20 und der kürzeren vertikalen Bürstenleiste 122 angeordnet ist.

Auf diese Weise ist eine verbesserte Reinigung insbesondere im Bereich zwischen horizontal und vertikal angerichteten Fliesen möglich.

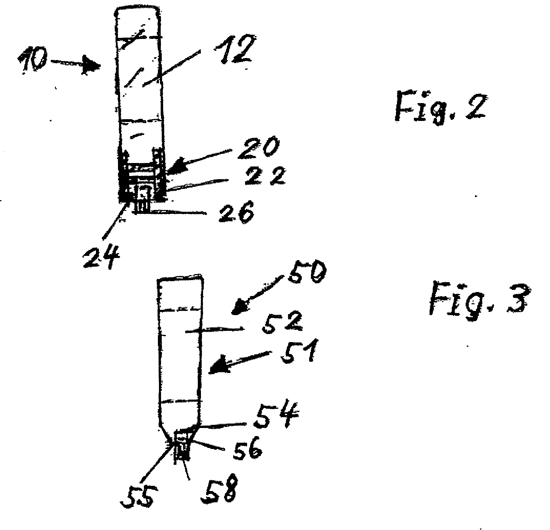

Fig. 2 zeigt die Darstellung von Fig. 1 von hinten im Schnitt, wobei die Einzelheiten der unteren langen Bürstenleiste 20 sowie eines Bürstenbündels 26 dargestellt sind. Die nicht dargestellte vertikale Bürstenleiste kann in gleicher Weise ausgebildet sein, oder auch aus in die Vorrichtung unmittelbar integrierten einzelnen Bürstenbündeln bestehen.

Als Material für die Bürsten kann im Handel ohne weiteres erhältliches steifes, aber elastisches Kunststoffmaterial eingesetzt werden, wie es für sonstige Reinigungsbürsten, beispielsweise auch für den Haushalt, bekannt ist. Ein Beispiel für ein geeignetes Material für den Grundkörper ist Polypropylen Copolymer mit einem Anteil von etwa 20 % Talkum. Dieses Material ist auch unter der Bezeichnung Karilen® bekannt. Der Bürstenkörper kann aus demselben Material bestehen wie die Borsten, selbstverständlich auch aus anderem Material als dem oben genannten Beispiel. Als Material für die Borsten kann beispielsweise Polyamid 66 verwendet werden, welches unter der Bezeichnung Stylon 66 kommerziell erhältlich ist.

Fig. 3 zeigt ein anderes Ausführungsbeispiel der Erfindung, nämlich eine Vorrichtung mit einstückig mit der Bürstenleiste ausgebildetem Haltegriff 51, der im unteren Bereich 54 zur unteren Befestigungskante beziehungsweise Befestigungsebene 55 hin verschmälert ist, an welcher die Bürstenbündel 58 über an der Unterkante 55 vorgesehene Halteösen 56 befestigt sind.

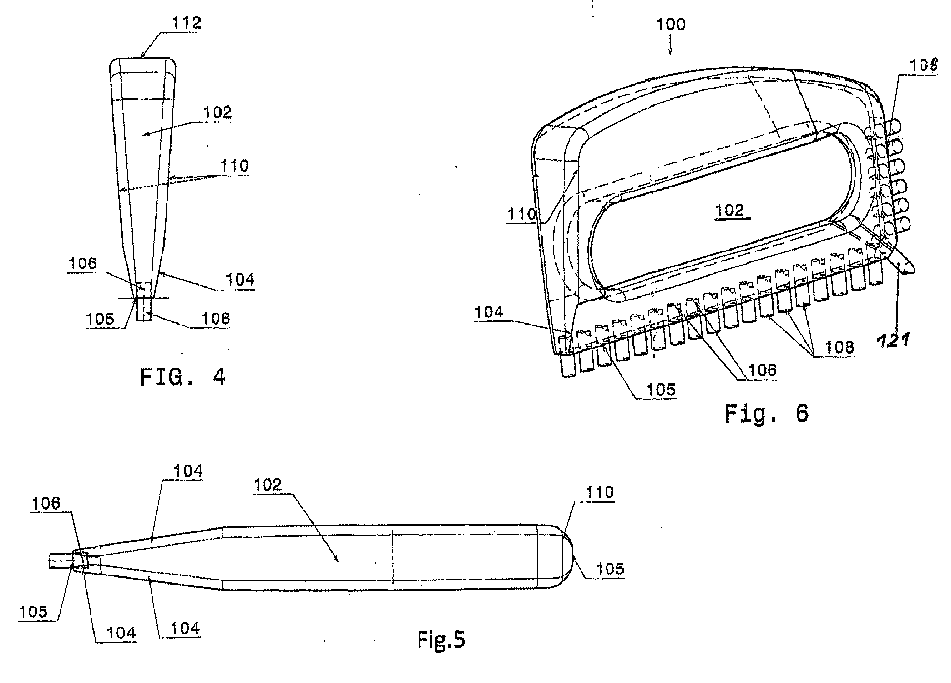

Die Fig. 4, Fig. 5 und Fig. 6 zeigen ein bevorzugtes Ausführungsbeispiel der Erfindung. Die allgemeinen mit 100 bezeichnete Vorrichtung erstreckt sich von der unteren schmalen Befestigungsebene 105 für die einzelnen Bürstenbündel 108, welche in entsprechenden Befestigungsösen 106 befestigt sind, sich verbreiternd nach oben.

In Fig. 4 ist zunächst ein steiler Verbreiterungsbereich 104 sichtbar, der in einer geringeren Verbreiterung 110 bis zur oberen Kante 112 führt. Die Unterkante 105 zur Aufnahme der Befestigungsösen 106 für die Bürstenbündel 108 ist etwa 4 bis 6 mm breit, die Oberkante 112 etwa 12 bis 20 mm breit, so dass ein besonders bequemer Griff entsprechend den Abmessungen der Hand ermöglicht wird. Die Grifföse ist mit 102 bezeichnet.

Fig. 5 zeigt die Vorrichtung von Fig. 4 von oben, wobei gleiche Teile mit gleichen Bezugszeichen versehen sind. Der breitere Kantenbereich 110 und der schmale gegenüberliegende Kantenbereich 104 , welcher die gleiche Breite wie die Bürstenebene 105 aufweist, sind dabei wegen des geringfügig kleineren Winkels a, wie in Fig. 1 zu sehen, sichtbar. Die zusätzlichen Bürstenbündel an einer schmalen Kante der Vorrichtung sind in Fig. 4 und Fig. 5 nicht dargestellt.

Fig. 6 zeigt eine perspektivische Darstellung der in Fig. 4 und Fig. 5 gezeigten Vorrichtung von vorne und von der Seite, wobei gleiche Teile mit gleichen Bezugszeichen versehen sind. Sie gibt einen besseren Überblick über die erfindungsgemäße Vorrichtung einschließlich der Verbreiterung der einen verbreiterten Kante 110 nach oben, während die gegenüberliegende schmale Kante 104 die gleiche Breite wie die untere Bürstenkante 105 beibehält. Dies und die Art der Grifföse dienen zur Erzielung eines besonderes bequemen Griffes sowie der Anpassung an unterschiedliche Handgrößen und unterschiedliche Einsatzbedingungen.

Die einzelnen Bürstenbündel sind hierbei mit 108 bezeichnet, die sich in das Innere der Vorrichtungen erstreckenden Bohrungen mit 106, die unter Kante der Vorrichtung ist mit 105 bezeichnet. Weiterhin sind die kurze vertikale Befestigungsleiste mit Bürstenbündeln 108 sowie die Verbindungs-Bürstenleiste 121 dargestellt.

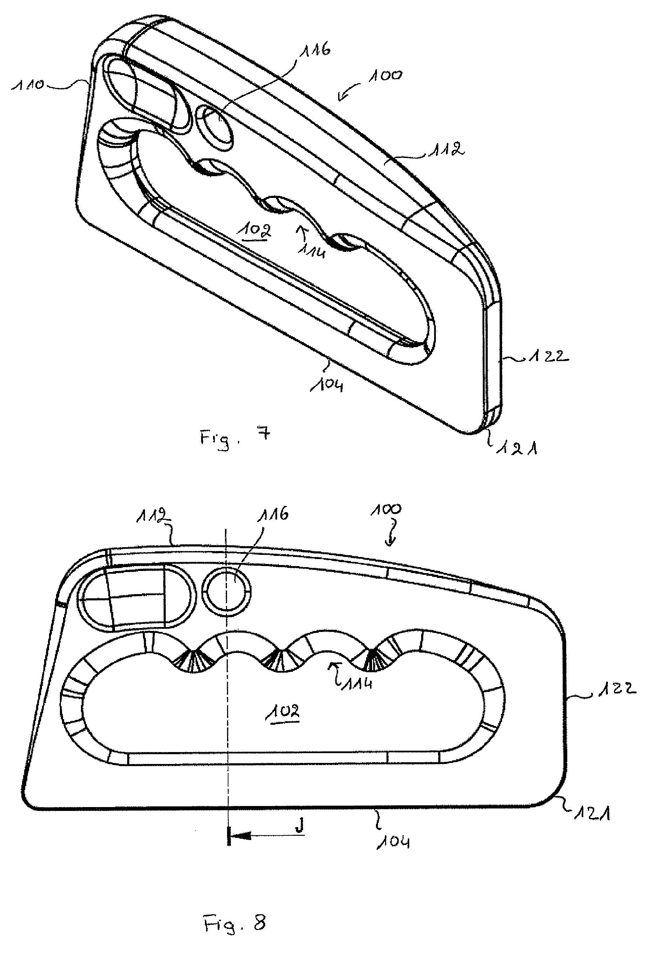

Die Ausführung der Fig. 7 und 8 unterscheidet sich von der Ausführung der Fig. 6 durch die Gestaltung des Haltegriffs 100, der im Bereich der Grifföse 102 mit Griffmulden 114 versehen ist, um die erfindungsgemäße Vorrichtung noch besser greifen und handhaben zu können. Erfindungsgemäß sind entlang der unteren Längskante 104 Bürstenbündel vorgesehen, die in den Fig. 7 und 8 jedoch nicht dargestellt sind. Diese können in Form einzelner Bündel, wie in Fig. 6 dargestellt, oder in Form einer durchgehenden Bürste gestaltet und auf dieselbe Weise mit dem Griffkörper verbunden sein, wie oben beschrieben. Ebenso können auch bei der Ausgestaltung der Fig. 7 und 8 entlang der vertikalen Seitenkante eine Bürstenleiste 122 sowie eine Verbindungs-Bürstenleiste 121 vorgesehen sein. Insofern wird auf die obige Beschreibung der Fig. 6 hingewiesen. Gleiches gilt für die Formgebung des Griffs 100, der zur oberen Kante 112 hin verbreitert sein kann, um eine besonders angenehme Handhabung sowie eine Anpassung an unterschiedliche Handgrößen zu ermöglichen.

In der in Fig. 7 und 8 gezeigten Ausführung ist ferner in dem Griff 100 ein Loch 116 vorgesehen, in das ein Stiel (nicht gezeigt) eingesetzt werden kann, um mit der Vorrichtung auch in aufrechter Haltung bequem arbeiten zu können. Das Loch kann auch anders als in den Figuren gezeigt ausgerichtet sein, um unterschiedliche Einfügepositionen für den Stiel zu ermöglichen.

Die vorstehende Zeichnung soll eine Erläuterung und unter Umständen auch eine Ergänzung der Ansprüche an Hand der Zeichnung darstellen.

## Patentansprüche

1. Fugen-Reinigungsvorrichtung, die
einen Haltegriff (11; 51; 101 ), wenigstens eine schmale Bürstenleiste (20) mit Bürsten und eine mit dem Haltegriff (11) einstückig ausgebildete Halteleiste (22) mit Befestigungsösen (23) für eine einzige längliche Bürste oder für eine Vielzahl nebeneinander liegender einzelner Bürstenbündel (26) aufweist, wobei die Breite der Bürsten senkrecht zur Längsrichtung der Bürstenleiste kleiner oder gleich der Breite der zu bearbeitenden Fugen ist, und die Bürsten aus Kunststoff hergestellt sind.

2. Vorrichtung nach Anspruch 1, **dadurch gekennzeichnet, dass** der Haltegriff eine schmale Seitenkante (14) aufweist und diese Seitenkante (14) mit der Bürstenleiste (20) einen Winkel einschließt, der geringfügig kleiner als 90° ist, vorzugsweise 84° bis 88°.

3. Vorrichtung nach einem der Ansprüche 1 bis 2, **dadurch gekennzeichnet, dass** der Haltegriff ((11; 51; 101) als Verlängerung der Bürstenleiste (20) und als längliche Grifföse im Wesentlichen parallel zur Bürstenebene (25; 105) der Bürstenleiste ausgebildet ist.

4. Vorrichtung nach einem der Ansprüche 1 bis 3, **dadurch gekennzeichnet, dass** der Haltegriff (101) von der Bürstenebene (105) der Bürstenleiste zur oberen Kante beidseits der Bürstenleiste verbreitert ist, vorzugsweise auf 16 bis 24 mm, oder nur an einer der beiden seitlichen Kanten (110) verbreitert ist, und dass die Kantenhöhe an gegenüber liegenden Abschnitten des Haltegriffes (101) unterschiedlich hoch sein kann.

5. Vorrichtung nach einem der Ansprüche 1 bis 4, **dadurch gekennzeichnet, dass** die Bürstenleiste (20) mit einer durchgehenden Bürste bestückt ist, vorzugsweise in einer Breite von 4 bis 6 mm.

6. Vorrichtung nach einem der Ansprüche 1 bis 4, **dadurch gekennzeichnet, dass** die Bürstenleiste (20) mit einzelnen Bürstenbündel (26; 108) bestückt ist, vorzugsweise mit einem Durchmesser zwischen 4 und 6 mm, die hintereinander in einer Reihe an der Bürstenleiste (20) angeordnet sind, wobei dazwischen Leerräume (28) angeordnet sind, vorzugsweise zwischen 1 und 6 mm, noch mehr bevorzugt zwischen 2 und 4 mm.

7. Vorrichtung nach einem der Ansprüche 1 bis 6, **dadurch gekennzeichnet, dass** die Bürstenhöhe abhängig von Art und Material der Fugen und dem Bürstenmaterial gewählt wird, vorzugsweise zwischen 2 bis 10 mm, noch mehr bevorzugt zwischen 4 und 6 mm.

8. Vorrichtung nach einem der Ansprüche 1 bis 7, **dadurch gekennzeichnet, dass** als Material für Bürsten übliches elastisches Kunststoffmaterial von hoher Steifigkeit eingesetzt ist, wobei eine Vielzahl dünner Einzelfasern zu einem Bündel zusammen gepresst und in Halteösen gedrückt sind.

9. Vorrichtung nach einem der Ansprüche 1 bis 8, **dadurch gekennzeichnet, dass** die Bürstenleiste eine lange untere Bürstenleiste (20) an der Unterkante der Halteleiste (22) und eine kürzere vertikale Bürstenleiste (122) an einer zu dieser im wesentlichen senkrechten Seitenkante (15), und vorzugsweise eine zusätzlich in einem Winkel von etwa 45° zu der unteren und der vertikalen Bürstenleiste angeordnete Verbindungs-Bürstenleiste (121) umfasst.

## Claims

1. A joint-cleaning device, which has
a handle (11; 51; 101), at least one narrow brush strip (20) with brushes, and a retaining strip (22), which is integrally formed with the handle (11) and has fastening eyelets (23) for a single elongate brush or for a plurality of individual brush bundles (26) situated next to each other, wherein the width of the brushes perpendicularly to the longitudinal direction of the brush strip is less than or equal to the width of the joints to be worked on, and the brushes are produced from plastic.

2. The device according to claim 1, **characterised in that** the handle has a narrow side edge (14), and said side edge (14) encloses with the brush strip (20) an angle that is slightly less than 90°, preferably 84° to 88°.

3. The device according to one of claims 1 to 2, **characterised in that** the handle (11; 51; 101) is formed as an extension of the brush strip (20) and as an elongate handle eyelet substantially parallel to the brush plane (25; 105) of the brush strip.

4. The device according to one of claims 1 to 3, **characterised in that** the handle (101) is widened from the brush plane (105) of the brush strip to the upper edge on both sides of the brush strip, preferably to 16 to 24 mm, or is widened only on one of the two lateral edges (110), and that the edge height can be different at opposite sections of the handle (101).

5. The device according to one of claims 1 to 4, **characterised in that** the brush strip (20) is fitted with a continuous brush, preferably having a width of 4 to 6 mm.

6. The device according to one of claims 1 to 4, **characterised in that** the brush strip (20) is fitted with individual brush bundles (26; 108), preferably having a diameter between 4 and 6 mm, which are arranged one behind the other in a row on the brush strip (20), wherein empty spaces (28) are arranged therebetween, preferably between 1 and 6 mm, more preferably between 2 and 4 mm.

7. The device according to one of claims 1 to 6, **characterised in that** the brush height is selected depending on the type and material of the joints and on the brush material, preferably between 2 and 10 mm, more preferably between 4 and 6 mm.

8. The device according to one of claims 1 to 7, **characterised in that** conventional elastic plastic material of high rigidity is used as the material for brushes, wherein a plurality of thin individual fibres are pressed together to form a bundle and pushed into retaining eyelets.

9. The device according to one of claims 1 to 8, **characterised in that** the brush strip comprises a long lower brush strip (20) on the lower edge of the retaining strip (22) and a shorter vertical brush strip (122) on a side edge (15) that is substantially perpendicular to said lower edge, and preferably a connecting brush strip (121), which is additionally arranged at an angle of approximately 45° to the lower brush strip and the vertical brush strip.

## Revendications

1. Dispositif de nettoyage de joints, qui
comporte une poignée (11 ; 51 ; 101), au moins une baguette à brosses (20) étroite avec des brosses et une baguette de maintien (22) constituée en une seule pièce avec la poignée (11) avec des oeillets de fixation (23) pour une brosse longitudinale unique ou pour une pluralité de paquets de brosses (26) individuels situés l'un près de l'autre, la largeur des brosses étant, perpendiculairement à la direction longitudinale de la baguette de brosses, plus petite ou égale à la largeur des joints à traiter et les brosses étant fabriquées en matière plastique.

2. Dispositif selon la revendication 1, **caractérisé en ce que** la poignée comporte une arête latérale étroite (14) et cette arête latérale (14) forme avec la baguette à brosses (20) un angle qui est légèrement plus petit que 90°, de préférence 84° à 88°.

3. Dispositif selon l'une quelconque des revendications 1 à 2, **caractérisé en ce que** la poignée (11 ; 51 ; 101) est constituée comme prolongation de la baguette à brosses (20) et comme oeillet de maintien pour l'essentiel parallèle au plan des brosses (25 ; 105) de la baguette à brosses.

4. Dispositif selon l'une quelconque des revendications 1 à 3, **caractérisé en ce que** la poignée (101) est élargie du plan des brosses (105) de la baguette à brosses vers l'arête supérieure des deux côtés de la baguette à brosses, de préférence sur 16 à 24 mm, ou n'est seulement élargie que sur une des deux arêtes latérales (110) et **en ce que** la hauteur d'arête peut être de hauteur différente sur les sections opposées de la poignée (101).

5. Dispositif selon l'une quelconque des revendications 1 à 4, **caractérisé en ce que** la baguette à brosses (20) est dotée d'une brosse continue, de préférence dans une largeur de 4 à 6 mm.

6. Dispositif selon l'une quelconque des revendications 1 à 4, **caractérisé en ce que** la baguette à brosses (20) est dotée de paquets de brosses individuels (26 ; 108), de préférence avec un diamètre variant entre 4 et 6 mm, qui sont disposées en rangée les uns derrière les autres sur la baguette à brosses (20), des espaces libres (28) étant disposés entre eux, de préférence entre 1 et 6 mm, de façon encore plus préférée entre 2 et 4 mm.

7. Dispositif selon l'une quelconque des revendications 1 à 6, **caractérisé en ce que** la hauteur de brosse est choisie en fonction du type et du matériau des joints et du matériau de brosse, de préférence entre 2 à 10 mm, de façon encore plus préférée entre 4 et 6 mm.

8. Dispositif selon l'une quelconque des revendications 1 à 7, **caractérisé en ce qu'**une matière plastique élastique usuelle d'une haute rigidité est utilisée comme matériau pour les brosses, une pluralité de fibres individuelles fines étant comprimées ensemble en un paquet et appuyées dans les oeillets de maintien.

9. Dispositif selon l'une quelconque des revendications 1 à 8, **caractérisé en ce que** la baguette à brosses comprend une baguette à brosses (20) inférieure longue sur l'arête inférieure de la baguette de maintien (22) et une baguette à brosses verticale plus courte (122) sur une arête latérale (15) pour l'essentiel perpendiculaire à celle-ci et de préférence une baguette à brosses de liaison (121) disposée en plus dans un angle d'environ 45° par rapport à la baguette à brosses inférieure et la baguette à brosses verticale.
